**Europäisches Patentamt**

**European Patent Office**

**Office européen des brevets**

(11) Numéro de publication : **0 282 372 B1**

(12)

# FASCICULE DE BREVET EUROPEEN

(45) Date de publication du fascicule du brevet :
**29.05.91 Bulletin 91/22**

(51) Int. Cl.⁵ : **G01P 5/00**

(21) Numéro de dépôt : **88400306.2**

(22) Date de dépôt : **10.02.88**

(54) **Système autonome de mesure cinématique pour hélicoptère.**

(30) Priorité : **12.02.87 FR 8701770**

(43) Date de publication de la demande :
**14.09.88 Bulletin 88/37**

(45) Mention de la délivrance du brevet :
**29.05.91 Bulletin 91/22**

(84) Etats contractants désignés :
**DE GB IT**

(56) Documents cités :
**EP-A- 0 204 856**

(73) Titulaire : **SOCIETE DE FABRICATION D'INSTRUMENTS DE MESURE (S.F.I.M.) 13, avenue Marcel Ramolfo-Garnier F-91301 Massy (FR)**

(72) Inventeur : **Favre, Hélène
2 Square Roger Salengro
F-91300 Massy (FR)**
Inventeur : **Audren, Jean Thierry
14, Allée des Genêts
Les Ulis F-91400 Orsay (FR)**

(74) Mandataire : **Martin, Jean-Jacques et al
Cabinet REGIMBEAU 26, Avenue Kléber
F-75116 Paris (FR)**

## Description

L'invention est relative à un système autonome de mesure cinématique pour hélicoptère.

Actuellement, les systèmes de navigation pour hélicoptère permettent de déterminer les paramètres de navigation de celui-ci, paramètres tels que la vitesse relative de l'hélicoptère par rapport au sol (voir par exemple la demande de brevet européen n° 0 204 856), l'angle de cap $\theta$ défini comme l'angle de l'axe longitudinal de l'hélicoptère et de la direction du nord géographique, la vitesse de l'hélicoptère par rapport à l'air exprimée selon ses composantes Vax parallèle à l'axe xx longitudinal de l'hélicoptère et latérale Vay, parallèle à un axe yy perpendiculaire à l'axe longitudinal xx. Par commodité, mais de façon non limitative, les axes longitudinal xx et transversal yy de l'hélicoptère se coupent au centre de gravité G de celui-ci, et définissent,l'hélicoptère étant au sol, un plan parallèle à celui-ci.

Pour déterminer la vitesse relative de l'hélicoptère par rapport à l'air, des cellules anémométriques sont utilisées. Si celles-ci permettent de déterminer avec une bonne précision la vitesse relative de l'hélicoptère par rapport à l'air notamment dans sa composante longitudinale Vax dans le domaine des hautes vitesses, c'est-à-dire pour une composante de vitesse longitudinale Vax supérieure à 50 noeuds soit environ 25 m/s, il n'en va pas de même pour le domaine des basses vitesses correspondant aux composantes de vitesse inférieures à 25 m/s et notamment aux vitesses faibles de vol stationnaire de l'hélicoptère. Dans ce dernier cas, la vitesse relative de l'hélicoptère par rapport à l'air ne peut être obtenue que par la mise en oeuvre d'appareils spéciaux, coûteux, fragiles et dont l'utilisation ne peut guère être envisagée que dans le cadre d'essais en vol.

D'autre part, les systèmes de navigation actuels, tels que celui décrit dans la demande de brevet européen n° 0 280 599 ayant une date de priorité antérieure à celle de la demande, permettant de mesurer la vitesse par rapport à l'air d'un hélicoptère aux faible vitesses présentent un défaut de constance de précision de mesure dans la plage des vitesses précitées. En outre, ils sont tributaires, afin de remédier à cet inconvénient, d'appareils de mesure auxiliaires, lesquels sont fragiles et délicats à mettre en oeuvre.

Le système autonome de mesure cinématique pour hélicoptère, objet de l'invention, a pour but de remédier aux inconvénients précités par la mise en oeuvre d'un système de mesure cinématique autonome pour hélicoptère permettant d'obtenir une précision de mesure de la vitesse de l'hélicoptère par rapport à l'air, sensiblement comparable sur toute la plage de ladite vitesse de l'hélicoptère.

Un autre objet du système de mesure cinématique objet de l'invention, est la mise en oeuvre d'un système de mesure cinématique pour hélicoptère exempt d'appareils auxiliaires de mesure de la vitesse de l'hélicoptère par rapport à l'air dans le domaine des basses vitesses.

Un autre objet de la présente invention est la mise en oeuvre d'un système autonome de mesure cinématique pour hélicoptère dans lequel, en l'absence d'appareils auxiliaires de mesure de la vitesse relative de l'hélicoptère par rapport à l'air aux basses vitesses, la détermination des composantes longitudinale Vax et latérale Vay est obtenue à partir des seuls paramètres mécaniques et/ou dynamiques de fonctionnement de l'hélicoptère en vol.

Un autre objet du système autonome de mesure cinématique pour hélicoptère objet de l'invention est la mise en oeuvre d'un système autonome de mesure cinématique pour hélicoptère non dédié, ledit système autonome de mesure cinématique pour hélicoptère non dédié pouvant être conditionné en un système de mesure cinématique dédié, c'est-à-dire un système de mesure cinématique configuré non seulement à un type, mais à chaque hélicoptère d'un type considéré, suite à un processus d'éducation ou de calibration du système au cours d'un vol d'essai.

Un autre objet du système autonome de mesure cinématique selon l'invention est enfin la mise en oeuvre d'un système de mesure cinématique autonome adaptatif, c'est-à-dire susceptible d'assurer une quasi totale indépendance de la précision de mesure des valeurs des composantes de vitesse relative de l'hélicoptère par rapport à l'air bien que les caractéristiques mécaniques ou dynamiques de composants mécaniques de l'hélicoptère permettant la détermination desdites vitesses soient sujettes à variation et dégradation en fonction de l'usure de ces composants et/ou de leur disparité ou variation lors de leur remplacement au cours de programmes d'entretien systématique.

Le système autonome de mesure cinématique pour hélicoptère objet de l'invention, l'hélicoptère comportant un rotor de sustentation, un rotor anticouple, des premiers moyens de commande du pas cyclique et du pas collectif du rotor de sustentation et des deuxièmes moyens de commande du pas du rotor anticouple, est remarquable en ce que des directions longitudinale et transversale étant définies par un repère d'axes x, y, lié au centre de gravité de l'hélicoptère et définissant l'hélicoptère étant au sol, un plan parallèle à celui-ci, le système comporte des moyens de mesure de la vitesse par rapport au sol de l'hélicoptère, lesdits moyens délivrant en fonctionnement un signal de vitesse de l'hélicoptère par rapport au sol, des moyens de mesure du pas cyclique longitudinal et du pas cyclique latéral des pales du rotor de sustentation délivrant un signal de mesure du pas cyclique longitudinal et du pas cyclique latéral, des moyens de mesure du pas collectif imprimé aux pales du rotor de sustentation délivrant un signal de mesure du pas collectif, des moyens de mesure du pas du rotor anti-couple, des moyens du type accéléromètre, lesdits moyens du type accéléromètre permettant de délivrer un signal d'accélération de l'hélicoptère, ledit signal d'accélération correspondant à un premier signal représentatif de l'accélération longitudinale et à un deuxième signal représentatif de l'accélération latérale de l'hélicoptère par rapport au sol, des moyens de mesure de l'angle de cap de l'hélicoptère permettant de délivrer un signal représentatif de l'angle de cap de l'hélicoptère, des moyens de calcul auxiliaires recevant les informations de vitesse de l'hélicoptère par rapport au sol, de pas cyclique longitudinal, latéral et collectif du rotor de sustentation, de pas du rotor anticouple, d'accélération longitudinale et transversale de l'hélicoptère par rapport au sol et délivrant les informations de vitesse longitudinale et latérale de l'hélicoptère par rapport à l'air, lesdites vitesses longitudinale et latérale étant calculées à partir d'une fonction biunivoque des valeurs des paramètres mécaniques et dynamiques mesurés de pas cyclique longitudinal et transversal, de pas collectif du rotor de sustentation, de pas du rotor anticouple, de l'accélération longitudinale et latérale de l'hélicoptère par rapport au sol.

L'invention trouve application à l'industrie aéronautique des hélicoptères à usage militaire ou civil.

Elle sera mieux comprise à la lecture de la description et à l'observation des dessins ci-après dans lesquels:
- la figure 1a représente un hélicoptère en vol, en vue de dessus,
- la figure 1b représente un hélicoptère en vol en vue latérale,
- la figure 1c représente un hélicoptère en vol en vue de face, les figures 1a, 1b, 1c permettant de définir et illustrer les différents paramètres mécaniques et dynamiques de l'hélicoptère en vol,
- la figure 2 représente un système de mesure cinématique complet, conformément à l'objet de l'invention,
- la figure 3 représente un détail de réalisation d'un élément essentiel du système de mesure cinématique objet de l'invention constitué par le calculateur auxiliaire associé au système de mesure cinématique,
- la figure 4a représente de manière schématique un processus de calibration ou d'éducation d'un système de mesure cinématique conforme à l'invention par une série de figures de vol élémentaires, le système étant embarqué,
- la figure 4b représente un organigramme d'un programme de type menu permettant grâce à un dialogue interactif pilote machine, la conduite du processus de calibration ou d'éducation précité,
- la figure 4c représente un diagramme des valeurs de coefficients de pondération utilisés pour réaliser une transition de la valeur calculée de la vitesse de l'hélicoptère par rapport à l'air Vax, sur toute la plage de vitesses, hautes vitesses, basses vitesses, de l'hélicoptère.

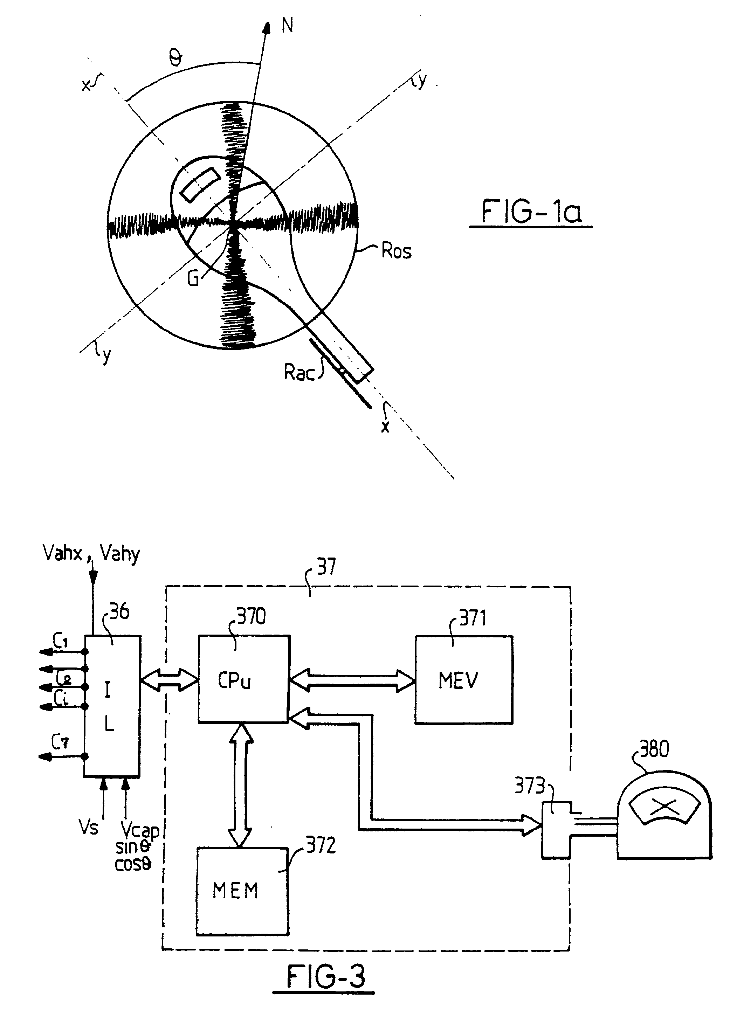

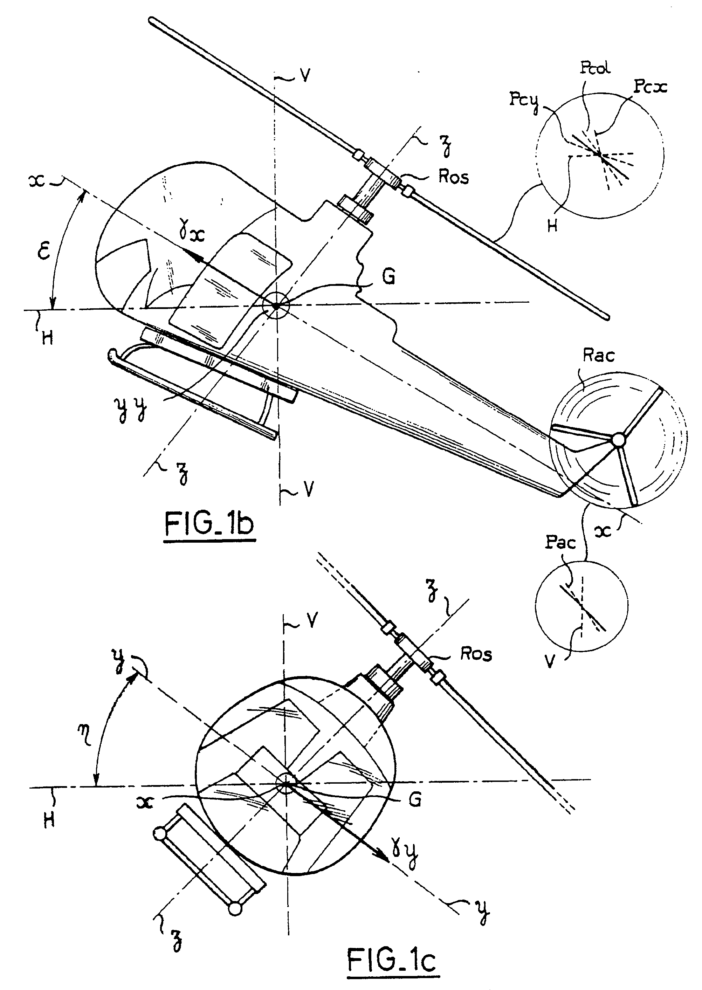

Le système autonome de mesure cinématique pour hélicoptère, objet de l'invention, sera tout d'abord décrit en liaison avec les figures 1a, 1b, 1c, lesquelles, représentant un hélicoptère en vol, permettent de définir les différents paramètres mécaniques et/ou dynamiques intervenant dans le système de mesure cinématique objet de l'invention.

Sur la figure 1a, on a représenté l'hélicoptère en vol en vue de dessus, un repère d'axes axe longitudinal xx, et axe latéral ou transversal yy, de l'hélicoptère étant lié à celui-ci en son centre de gravité G, l'hélicoptère suivant une trajectoire formant un angle de cap θ par rapport à la direction du nord géographique représenté par la flèche N. L'angle de cap est défini comme l'angle formé par la direction longitudinale xx de l'hélicoptère et le nord géographique.

Sur la figure 1b, laquelle représente l'hélicoptère en vol en vue latérale, l'hélicoptère est réputé comprendre un rotor de sustentation noté Ros et un rotor anticouple Rac. De manière classique, l'hélicoptère comporte également des premiers moyens de commande du pas cyclique noté Pc et du pas collectif noté Pcol du rotor de sustentation Ros. On rappelle pour mémoire que les pales du rotor de sustentation Ros, présentent par rapport à une direction de référence, la direction H sur les figures 1a et 1b, une inclinaison moyenne dite inclinaison de pas collectif, laquelle peut, bien entendu, être commandée par le pilote à l'aide des premiers moyens de commande précités.

A l'inclinaison de pas collectif des pales du rotor de sustentation Ros est superposée une inclinaison dite de pas cyclique notée Pc. Sur les figures 1b et 1c, on a en outre représenté le système d'axe formant repère comportant l'axe longitudinal noté xx, l'axe latéral transversal noté yy, ces axes définissant, lorsque l'hélicoptère est au sol, un plan parallèle à celui-ci. Les directions longitudinale x et transversale y de l'hélicoptère en vol sont définies par les axes xx et yy de celui-ci. L'axe zz est orthogonal au plan formé par les axes xx et yy précédemment cités au centre de gravité G de l'hélicoptère. Bien entendu, tout autre système d'axe défini par translation d'un vecteur déterminé, peut de manière non limitative et sans sortir du cadre de l'objet de l'invention, être utilisé.

A partir des axes précédemment définis, le pas cyclique des pales du rotor de sustentation Ros, pas cyclique noté Pc, se décompose en un pas cyclique longitudinal Pcx des pales du rotor de sustentation Ros et un pas cyclique latéral noté Pcy. Le pas cyclique longitudinal Pcx et le pas cyclique latéral Pcy apparaissent donc comme le pas d'inclinaison des pales appliqué respectivement à celles-ci, lorsque, au cours de la rotation, une

3

pale considérée se trouve alignée dans la direction xx, respectivement yy. L'inclinaison de pas cyclique est ainsi périodiquement appliquée en superposition à l'inclinaison de pas collectif des pales du rotor de sustentation, ainsi qu'il est bien connu du principe de fonctionnement des hélicoptères.

En fonction des conditions de vol, le pilote est ainsi amené à modifier d'une part l'inclinaison de pas collectif en vue d'assurer la sustentation de l'hélicoptère à une altitude déterminée, et d'autre part, l'inclinaison de pas cyclique et notamment d'inclinaison de pas cyclique longitudinal et transversal, afin d'assurer le déplacement correspondant en translation de l'hélicoptère, soit en mouvement avant arrière, arrière avant, soit en mouvement latéral. La modification du pas collectif et du pas cyclique longitudinal et transversal est effectué à l'aide des premiers moyens de commande précédemment cités. Ceux-ci seront décrits plus en détail ultérieurement dans la description.

Sur la figure 1b, on a représenté relativement aux pales du rotor de sustentation Ros, par rapport à une direction de référence telle que l'horizontale notée H, l'inclinaison de pas collectif Pcol et l'inclinaison de pas cyclique noté respectivement pas cyclique longitudinal Pcx et pas cyclique latéral Pcy, ces différentes inclinaisons étant représentées en trait mixte. La pale correspondante du rotor de sustentation Ros est représentée en trait continu et présente une inclinaison intermédiaire par rapport aux inclinaisons de pas cyclique et de pas collectif précédemment citées. En outre, l'hélicoptère comporte des deuxièmes moyens de commande du pas noté Pac du rotor anticouple, c'est-à-dire de l'inclinaison des pales de celui-ci. De la même façon, sur la figure 1b, on a représenté le paramètre d'inclinaison du pas anticouple Pac par un trait pointillé par rapport à une direction de référence, la verticale notée V. Les deuxièmes moyens de commande permettent également au pilote de régler l'inclinaison de pas anticouple du rotor anticouple.

Sur les figures 1b et 1c, on a également représenté les paramètres d'attitude de l'hélicoptère en vol, l'angle d'inclinaison de l'hélicoptère dans le plan contenant l'axe longitudinal xx de celui-ci par rapport à l'horizontale H étant noté $\varepsilon$, l'angle précité corespondant à l'angle formé par la composante d'accélération longitudinale $\gamma x$ avec la direction de l'horizontale H, en l'absence d'accélération propre de l'hélicoptère.

Sur la figure 1c, on a également représenté l'angle d'inclinaison de l'hélicoptère dans le plan contenant l'axe latéral yy, cet angle étant noté $\eta$ et correspondant à l'angle formé par la composante d'accélération latérale notée $\gamma y$ de l'hélicoptère, avec la direction de l'horizontale H, en l'absence d'accélération propre de l'hélicoptère.

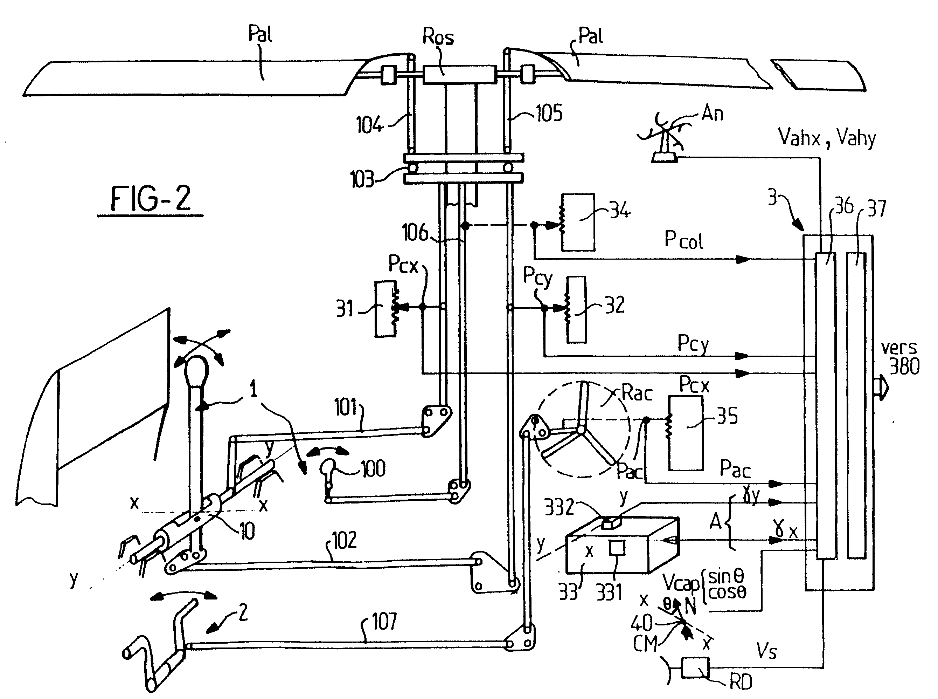

Les paramètres de fonctionnement mécaniques et dynamiques de l'hélicoptère en vol ayant été définis en liaison avec les figures 1a, 1b, 1c, une description plus détaillée du système autonome de mesure cinématique pour hélicoptère objet de l'invention sera donnée en liaison avec la figure 2.

Ainsi qu'il apparaît sur la figure précitée, le système objet de l'invention comporte des moyens de mesure de la vitesse par rapport au sol de l'hélicoptère. Sur la figure 2, les moyens de mesure précités sont notés RD, et peuvent avantageusement consister en un radar Doppler, embarqué sur l'hélicoptère. Ces moyens ne seront pas décrits en détail, car ils constituent l'équipement habituel d'un hélicoptère de combat.

Les moyens de mesure de la vitesse par rapport au sol de l'hélicoptère, délivrent en fonctionnement un signal noté Vs de vitesse de l'hélicoptère par rapport au sol. Le signal de vitesse de l'hélicoptère Vs peut avantageusement être décomposé en ses composantes selon l'axe longitudinal xx de l'hélicoptère et l'axe latéral yy, lesdites composantes étant alors notées Vsx et Vsy.

En outre, ainsi qu'on le remarquera en figure 2, le système autonome de navigation objet de l'invention, comporte également des moyens de mesure de l'angle de cap $\theta$ suivi par l'hélicoptère en vol. Ces moyens notés CM sur la figure 2, sont symboliquement représentés par une flèche notée N orientée par rapport à la direction xx. Ces moyens peuvent avantageusement être réalisés par un compas magnétique par exemple. Ils ne seront pas décrits car ce type d'appareillage fait normalement partie de l'équipement de bord de l'hélicoptère.

Sur la figure 2, on a représenté les organes essentiels d'un hélicoptère comportant un rotor de sustentation noté Ros, un rotor anticouple noté Rac, les premiers moyens de commande du pas cyclique Pc et du pas collectif Pcol des pales du rotor de sustentation Ros. On notera que, de manière classique, les premiers moyens de commande, notés 1, du pas cyclique Pc et du pas collectif Pcol des pales du rotor de sustentation Ros comportent un manche du type manche à balai, entrainant par un mécanisme 10 conférant au manche précité un double degré de liberté dans la direction longitudinale xx et dans la direction transversale ou latérale yy, un double jeu de tringlerie noté 101, 102. Le jeu de tringlerie précité commande le pas cyclique longitudinal Pcx et le pas cyclique transversal Pcy respectivement des pales notées Pal du rotor de sustentation par l'intermédiaire d'un système d'embrayage 103 et de tringles intermédiaires 104, 105. Le pas collectif Pcol est directement commandé par le degré de couplage de l'embrayage 103, par l'intermédiaire d'un deuxième levier noté 100, permettant, par l'intermédiaire d'une tringlerie 106, de régler l'inclinaison moyenne des pales du rotor de sustentation et de définir ainsi le pas collectif Pcol. Bien entendu, tout moyen de commande autre que celui représenté sur la figure 2, peut être utilisé. Ces éléments mécaniques ne seront pas décrits plus en détail car ils font partie de la technique connue de la commande d'entraînement et d'orientation des pales d'un hélicoptère.

De même, l'hélicoptère tel que représenté en figure 2 en ces éléments essentiels, comporte des deuxièmes moyens notés 2 de commande du pas noté Pac du rotor anticouple Rac. Les deuxièmes moyens de commande notés 2 permettent par l'intermédiaire d'une tringlerie 107, le réglage de l'inclinaison des pales du rotor anticouple Rac, de façon analogue, sensiblement au réglage du pas collectif du rotor de sustentation.

Afin d'assurer une mesure de la vitesse relative de l'hélicoptère par rapport à l'air dans le domaine des basses vitesses, c'est-à-dire pour des vitesses relatives de l'hélicoptère par rapport à l'air, inférieures à 50 noeuds, soit environ 25 m/s, et ce en l'absence d'appareils auxiliaires de mesure de la vitesse de l'hélicoptère par rapport à l'air dans le domaine des basses vitesses, le système autonome de mesure cinématique objet de l'invention, ainsi que représenté en figure 2, comporte de manière particulièrement avantageuse des moyens notés 3, 31, de mesure du pas cyclique longitudinal Pcx des pales du rotor de sustentation Ros, ces moyens délivrant un signal de mesure du pas cyclique longitudinal Pcx. De même, le système autonome de mesure cinématique pour hélicoptère objet de l'invention comprend des moyens notés 3, 32 de mesure du pas cyclique latéral Pcy des pales du rotor de sustentation Ros. Ces moyens délivrent un signal de mesure du pas cyclique latéral Pcy.

De même, des moyens de mesure 34 du pas collectif Pcol imprimé aux pales du rotor de sustentation Ros sont prévus et délivrent un signal de mesure du pas collectif Pcol.

De la même façon, des moyens 35 de mesure du pas Pac du rotor anticouple Rac délivrent un signal de mesure du pas Pac du rotor anticouple Rac.

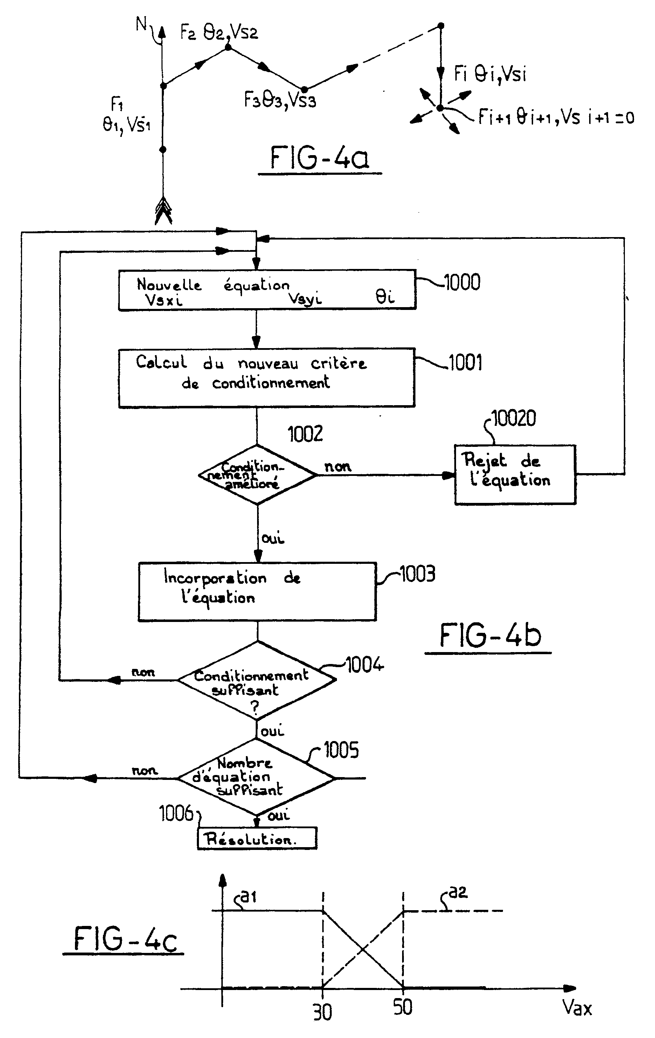

Ainsi qu'on l'a représenté en outre en figure 2, le système autonome de mesure cinématique pour hélicoptère objet de l'invention comporte également des moyens 33 du type accéléromètre. Les moyens du type accéléromètre peuvent a priori être constitués par tout moyen permettant de délivrer un signal d'accélération de l'hélicoptère noté A sur la figure 3. Le signal d'accélération A correspond à un premier signal $\gamma x$ représentatif de l'accélération longitudinale et un deuxième signal $\gamma y$ représentatif de l'accélération latérale de l'hélicoptère par rapport au sol.

A titre d'exemple non limitatif, les moyens 33 du type accéléromètre peuvent avantageusement être constitués par une centrale inertielle de type "strap-down", centrale inertielle liée, commercialisée par la Demanderesse sous la référence 28 SH. Cette centrale inertielle est une centrale haute performance, permettant de satisfaire aux besoins des hélicoptères de haut niveau à mission complexe, dans le domaine de la marine, du combat anti-chars, des renseignements et de l'observation. Pour un panorama complet des performances d'une telle centrale inertielle, on pourra se reporter à la note technique n° 1485/01/83 éditée par la Demanderesse.

Bien entendu, le système comporte en outre un calculateur auxiliaire référencé en 37 sur la figure 2. Le calculateur auxiliaire peut être constitué par un calculateur directement intégré à la centrale inertielle précitée ou au contraire, par un calculateur indépendant, de façon non limitative.

Ainsi qu'on l'a représenté en figure 2, les moyens de calcul auxiliaires 37 reçoivent les informations Vs de vitesse de l'hélicoptère par rapport au sol, délivrées par le système radar Doppler ou tout système équivalent, tel que système de navigation par satellite, récepteur du type système NAVSTAR. Le calculateur auxiliaire reçoit bien entendu également, les informations de pas cyclique longitudinal Pcx, de pas cyclique latéral Pcy, et de pas collectif Pcol du rotor de sustentation Ros, ainsi que les informations de pas du rotor anticouple Pac, d'accélération longitudinale $\gamma x$ et transversale ou latérale $\gamma y$ de l'hélicoptère par rapport au sol. Sur la figure 2, on a représenté les moyens de calcul 37 reliés aux différents moyens de mesure ou capteurs délivrant les informations précitées par l'intermédiaire d'un circuit 36 jouant le rôle d'interface entre le calculateur proprement dit 37 et les signaux délivrés par les moyens capteurs précités.

Conformément à l'invention, les moyens de calcul auxiliaires ou calculateurs auxiliaires 37 délivrent les informations de vitesse longitudinale Vax et latérale Vay de l'hélicoptère par rapport à l'air, ces vitesses longitudinale Vax et latérale Vay par rapport à l'air étant calculées à partir d'une fonction biunivoque des valeurs des paramètres mécaniques et dynamiques mesurés, valeurs de pas cyclique longitudinal Pcx, de pas cyclique latéral Pcy, de pas collectif Pcol du rotor de sustentation Ros, de pas Pac du rotor anticouple Rac, de l'accélération longitudinale $\gamma x$ et latérale $\gamma y$ de l'hélicoptère par rapport au sol.

De manière avantageuse, les moyens 31, 32 de mesure du pas cyclique longitudinal Pcx et du pas cyclique latéral Pcy comprennent des capteurs de position des moyens de commande 101, 102 du pas cyclique du rotor de sustentation. Ainsi que représenté de manière schématique en figure 2, ces capteurs de position peuvent avantageusement être constitués par des potentiomètres de recopie de position, dont la borne de connexion mobile est solidaire de la tringlerie 101, respectivement 102, de commande d'orientation des pales du rotor de sustentation.

De la même façon, des moyens 34, 35 de mesure du pas collectif Pcol du rotor de sustentation Ros, du

5

pas Pac du rotor anticouple Rac comprennent des capteurs de position des moyens de commande du pas collectif des pales du rotor de sustentation et du rotor anticouple. Ces capteurs de position sont également constitués par des potentiomètres de recopie de position dont la borne mobile est reliée à la tringlerie de commande des rotors correspondants, tringleries 106 et 107, respectivement.

Selon un aspect particulièrement avantageux du système de mesure cinématique autonome objet de l'invention, dans le domaine des basses vitesses de l'hélicoptère par rapport à l'air, la fonction biunivoque, à partir de laquelle sont établies les vitesses longitudinale Vax et latérale Vay de l'hélicoptère par rapport à l'air est une combinaison linéaire des informations mesurées précédemment citées.

Selon une autre caractéristique avantageuse du système de mesure cinématique objet de l'invention, les combinaisons linéaires des informations mesurées établissant la valeur de la vitesse longitudinale Vax respectivement latérale Vay de l'hélicoptère par rapport à l'air ont même forme et vérifient respectivement les relations :

$$Vax = \alpha 1 \ Pcx + \alpha 2 \ Pcy + \alpha 3 \ \gamma x + \alpha 4 \ \gamma y + \alpha 5 \ Pcol + \alpha 6 \ Pac + \alpha 7 \ ①$$

$$Vay = \beta 1 \ Pcx + \beta 2 \ Pcy + \beta 3 \ \gamma x + \beta 4 \ \gamma y + \beta 5 \ Pcol + \beta 6 \ Pac + \beta 7 \ ②$$

Dans les relations précitées, les coefficient $\alpha 1$, $\alpha 2$, $\alpha 3$, $\alpha 4$, $\alpha 5$, $\alpha 6$, $\alpha 7$, et $\beta 1$, $\beta 2$, $\beta 3$, $\beta 4$ $\beta 5$, $\beta 6$, $\beta 7$ sont des coefficients appartenant à l'ensemble des nombres réels.

Ainsi qu'on l'a représenté schématiquement en figure 2, les moyens de mesure et de calcul 3 comportent des moyens d'échantillonnage 36 et de numérisation des signaux de mesure du pas cyclique longitudinal Pcx, du pas cyclique latéral Pcy, du pas collectif Pcol et du pas Pac du rotor anticouple, ces moyens d'échantillonnage et de numérisation étant normalement prévus sur le circuit interface précédemment cité. Bien entendu, le circuit d'interface précité et les moyens d'échantillonnage reçoivent également l'information de vitesse par rapport au sol de l'hélicoptère, le signal Vs, lequel se décompose en deux signaux relatifs aux composantes de la vitesse longitudinale Vsx de l'hélicoptère par rapport au sol de la vitesse latérale Vsy correspondante. Le circuit d'interface 36 comportant les moyens d'échantillonnage et de numérisation précités reçoivent également le signal Vcap, mesuré par le compas magnétique précédemment cité, et délivré par exemple par la centrale inertielle, ainsi que décrit précédemment. Les moyens d'échantillonnage et de numérisation peuvent avantageusement être constitués par une carte de conversion analogique numérique rapide délivrant la valeur des signaux correspondants sous forme numérisée.

Les moyens de calcul proprement dits 37 des moyens calculateurs auxiliaires du système autonome de mesure cinématique seront décrits de façon plus détaillée, en liaison avec la figure 3.

Selon la figure précitée, les moyens de calcul proprement dits 37 peuvent également comporter une unité centrale de calcul notée CPU référencée 370 et des moyens de mémorisation. L'unité centrale de calcul peut par exemple être constituée par un microprocesseur commercialisé sous la référence 8080 par la société INTEL. En outre, les moyens de calcul proprement dits 37 comportent des moyens 371 de mémorisation du type mémoire vive, destinés à mémoriser la valeur instantanée des valeurs de mesure numérisée. La mémoire vive 371 notée MV sur la figure 4, présente de préférence une capacité mémoire de 0,5 koctet. En outre, des moyens 372 de mémorisation de type mémoire morte sont prévus, la mémoire vive 371 et la mémoire morte 372 étant connectée à l'unité centrale par une liaison par BUS de type habituel. Les moyens 372 de mémorisation de type mémoire morte comportent, pour un type d'hélicoptère donné et un hélicoptère donné de ce type une table de valeurs des coefficients $\alpha 1$, $\alpha 2$, $\alpha 3$, $\alpha 4$, $\alpha 5$, $\alpha 6$, $\alpha 7$ et $\beta 1$, $\beta 2$, $\beta 3$, $\beta 4$, $\beta 5$, $\beta 6$, $\beta 7$ permettant d'établir les valeurs des vitesses longitudinale Vax et latérale Vay en fonction des valeurs mesurées, en fonctionnement de l'hélicoptère.

Bien entendu, les moyens de calcul proprement dits 37 comportent un programme de calcul des valeurs des combinaisons linéaires exprimant la vitesse longitudinale Vax et transversale Vay. Ils peuvent comporter également, de manière avantageuse, un programme de calcul de changement d'axe par rotation sensiblement égale à 45°. En effet, au cours d'essais effectués de systèmes de navigation objet de l'invention, on a pu constater que la restitution de la valeur de vitesse longitudinale Vax, respectivement latérale Vay, de l'hélicoptère par rapport à l'air pour un type donné d'hélicoptère était sensiblement améliorée lorsque les valeurs de vitesse longitudinale Vax, respectivement latérale Vay étaient sensiblement rendues indépendantes des paramètres croisés de pas cyclique Pcy, respectivement Pcx, et d'accélération $\gamma y$, respectivement $\gamma x$ correspondants. Dans ce cas, les coefficients $\alpha 2$, $\alpha 4$ et $\beta 1$, $\beta 3$ sont dans les relations 1 et 2 précédentes, minimum. Ils ont pour valeur pour un hélicoptère de type donné $\alpha 2$ m et $\alpha 4$ m et respectivement $\beta 1$ m et $\beta 3$ m. Dans ce cas, les valeurs de la vitesse dite longitudinale et dite latérale de l'hélicoptère par rapport à l'air Vax et respectivement Vay, sont exprimées par rapport à des axes XY, orientés sensiblement à 45° par rapport aux axes xy précédemment décrits. Cette rotation d'axe a pour effet d'entraîner que l'influence sur les valeurs correspondantes de la vitesse des composantes orthogonales du pas cyclique Pcy, respectivement Pcx, latéral et longitudinal, ainsi que des accélérations transverale γy et longitudinale γx est minimalisée.

Différents essais pour un type de matériel donné, par exemple un hélicoptère de combat commercialisé par la société française Aérospatiale, sous la désignation de PUMA, ont montré que dans le cas où les fonctions biunivoques étaient réduites à des combinaisons linéaires, la meilleure restitution des vitesses longitudinale Vax et latérale Vay était obtenue pour un nombre de coefficients de combinaisons linéaires égal à 7. Les coefficients $\alpha 1$ à $\alpha 7$ et $\beta 1$ à $\beta 7$, respectivement. Dans ce cas, les écarts résiduels de vitesse sur la valeur de vitesse longitudinale Vax ont atteint 1,30 noeuds alors que l'écart résiduel sur les vitesses latérale Vay a atteint 1,68 noeuds, soit sensiblement des écarts inférieurs à 1 m/s respectivement. Dans le cas de l'utilisation de combinaisons linéaires, le nombre de coefficients $\alpha$, $\beta$ pris égal à 7 permet donc d'obtenir une restitution de vitesse longitudinale Vax, respectivement latérale Vay par rapport à l'air optimale.

Bien entendu, préalablement à l'implantation des valeurs des coefficients $\alpha 1$, $\alpha 2$, $\alpha 3$, $\alpha 4$, $\alpha 5$, $\alpha 6$, $\alpha 7$ et $\beta 1$, $\beta 2$, $\beta 3$, $\beta 4$, $\beta 5$, $\beta 6$, $\beta 7$ dans la mémoire morte 372 du calculateur proprement dit, les coefficients précités étant bien entendu caractéristiques d'un type d'hélicoptère et d'un hélicoptère en particulier, il est nécessaire d'effectuer un processus de calibration ou d'éducation du système autonome objet de l'invention, afin d'assurer une identification des coefficients précités. Préalablement à cette identification, le système de mesure cinématique, objet de l'invention est un système non dédié, ce système devenant au contraire un système dédié et autonome, après identification des coefficients précédemment cités pour un type et un hélicoptère de ce type particulier.

Afin de mettre en oeuvre le processus de calibration ou d'éducation du système de mesure cinématique non dédié tel que précédemment défini, les moyens de calcul proprement dits 37 recevant l'information de cap (Vcap) comportent également un programme de type menu, permettant, au moyen d'un dialogue interactif pilote-machine, d'effectuer par une opération de calibration ou éducation du système, pour un type d'hélicoptère et un hélicoptère donné, une identification des coefficients $\alpha$ et $\beta$ précités, à partir d'un vol d'essai de l'hélicoptère à bord duquel le système de mesure cinématique est embarqué.

Ainsi qu' on l'a représenté de manière schématique en figure 4a, le programme menu précité comporte une série d'incitations invitant le pilote à bord de l'hélicoptère, à effectuer au cours du vol d'essai une pluralité de figures de vol élémentaires notées F1, F2,... Fi. Chaque figure de vol élémentaire Fi est définie par une valeur de cap $\theta i$ et une valeur de vitesse Vsi de l'hélicoptère par rapport au sol. Bien entendu les paramètres d'angle de cap $\theta i$ et de vitesse Vsi sont pour le vol d'essai et les figures de vol élémentaire Fi constituant celui-ci, considérés comme variables indépendantes.

En outre, ainsi qu'on le comprendra facilement, pour chaque figure de vol élémentaire Fi constitutive du vol d'essai, le programme menu comporte avantageusement un sous-programme d'acquisition d'une pluralité de paramètres de calibration. Les paramètres de calibration consistent en la valeur mesurée au cours de la figure de vol élémentaire d'ordre i du pas cyclique longitudinal pcxi, du pas cyclique latéral pcyi, de l'accélération longitudinale γxi de l'accélération latérale γyi, du pas collectif pcoli, du pas du rotor anticouple paci et du cosinus du sinus de l'angle de cap $\theta i$ de l'hélicoptère.

Ainsi qu'on la représenté de manière schématique en figure 4b, pour chaque figure de vol élémentaire Fi constitutives du vol d'essai, le programme de type menu comporte un sous-programme d'évaluation des paramètres de calibration pour le vol d'essai considéré. La figure 4b représente un organigramme du sous-programme précité. Le sous-programme précité consiste à partir des valeurs mesurées de la vitesse de l'hélicoptère par rapport au sol, vitesse Vs exprimée sous la forme de ses composantes vitesse longitudinale Vsx et vitesse latérale Vsy, à établir à l'étape référencée 1000, pour les directions longitudinale et transversale de l'hélicoptère, les formes linéaires ci-après :

$$Vsxi = \alpha 1 \times pcx_i + \alpha 2 \times pcy_i + \alpha 3 \times \gamma x_i + \alpha 4 \times \gamma yi + \alpha 5 \times pcol_i$$
$$+ \alpha 6 \times pac_i + \alpha 7 + \alpha 8 \times Cos\theta_i + \alpha 9 \times Sin\theta_i , \qquad (3)$$

$$Vsyi = \beta 1 \times pcxi + \beta 2 \times pcy_i + \beta 3 \times \gamma x_i + \beta 4 \times \gamma yi + \beta 5 \times pcol_i \qquad (4)$$
$$+ \beta 6 \times pac_i + \beta 7 + \beta 8 \times Cos\theta_i + \beta 9 \times Sin\theta_i .$$

Dans les relations précitées, on notera que les coefficients $\alpha 1$, $\alpha 2$, $\alpha 3$, $\alpha 4$, $\alpha 5$, $\alpha 6$, $\alpha 7$ et $\beta 1$, $\beta 2$, $\beta 3$, $\beta 4$,

β5, β6, β7 ne sont autres que les coefficients des combinaisons linéaires précédemment décrites dans la description. De même, les coefficients α8, α9 et β8, β9 correspondent aux composantes estimées nord et est de la vitesse du vent au cours des figures de vol élémentaires Fi considérées, ou du vol d'essai. Pour cette phase de calibration, il est nécessaire que le vent présente une faible vitesse, mais surtout une valeur sensiblement constante au cours de chaque vol d'essai considéré, c'est-à-dire, que le vent ne présente pratiquement pas de rafale. Ainsi, l'algorithme de calcul, tel que représenté en figure 4a, détermine non seulement les paramètres de calibration précités, mais également les deux composantes de vent nord et est, qui sont alors supposées constantes au cours de l'essai.

Les formes linéaires correspondant aux relations 3 et 4 précédentes sont ensuite soumises à l'étape 1001, 1002, de la figure 4b, à un test de validation des paramètres de calibration de la figure de vol élémentaire Fi correspondante. Sur réponse négative d'amélioration du conditionnement du système de navigation, la forme linéaire représentée par la relation 3 ou la relation 4, ou équation, est rejetée en 1020 et le programme de type menu revient alors à la situation initiale pour inviter le pilote à effectuer une nouvelle figure de vol élémentaire correspondante, permettant à celui-ci d'effectuer une nouvelle tentative.

Sur réponse positive au test d'amélioration du conditionnement du système en 1002, la forme linéaire ou équation donnée par les relations 3 ou 4 est alors incorporée en 1003, de façon à constituer un système d'équations linéaires représentatif de l'état du système machine, système de mesure cinématique objet de l'invention, après la figure de vol élémentaire Fi d'ordre i acceptée. De préférence, le système d'équations S(Vsxi) S(Vsyi) pourra comporter un nombre d'équations redondant ainsi qu'il sera décrit ultérieurement dans la description.

Le système d'équations linéaires ainsi formé S(Vsxi), S(Vsyi) comportant i équations relatives à la vitesse relative de l'hélicoptère par rapport au sol, vitesse longitudinale VSxi et vitesse latérale VSyi, est alors soumis à un test de suffisance de conditionnement, ce test pouvant consister en une comparaison du nombre de valeurs de variables indépendantes, angle de cap θi et de vitesse par rapport au sol Vsxi, Vsyi, par rapport à une valeur de référence par exemple. Une réponse négative au test précité en 1004, relatif à la suffisance du conditionnement, a pour effet de ramener le système en situation initial pour le choix d'une nouvelle figure de vol élémentaire susceptible de permettre l'établissement d'une nouvelle forme linéaire ou nouvelle équation, à partir d'une figure de vol élémentaire supplémentaire.

Au contraire, en cas de réponse positive au test formé en 1004, le système d'équations S(Vsxi), S(Vsyi) est soumis en 1005, à un test de suffisance du nombre d'équations le constituant, afin, sur réponse négative, d'inciter le pilote à effectuer une autre figure de vol élémentaire, par retour à la situation initiale, et, sur réponse positive, d'effectuer la résolution en 1006 du système d'équations pour déterminer la valeur des coefficients α1 à α9, et β1 à β9 constituant les combinaisons linéaires permettant d'exprimer la vitesse longitudinale Vax et latérale Vay de l'hélicoptère par rapport à l'air.

Selon une caractéristique avantageuse du processus de calibration ou d'éducation du système de mesure cinématique objet de l'invention, le test 1001, 1002 de validation des paramètres de calibration de la figure de vol élémentaire Fi correspondante est effectué sur un critère d'état représentatif de la distribution uniforme des angles de cap θi et des valeurs de vitesse par rapport au sol Vsxi et Vsyi, sur la plage des vitesses et des angles de cap utilisés pour la définition des figures de vol élémentaire Fi.

Les incitations ou directives données au pilote par le programme de type menu sont avantageusement données sous la forme d'instructions d'angle de cap θi et de vitesse par rapport au sol Vsi pour les différentes figures de vol élémentaire Fi successives. Les instructions de vitesse par rapport au sol sont données au pilote sous forme de valeur de composante de vitesse longitudinale Vsxi et latérale Vsyi par rapport au sol. De manière avantageuse mais non limitative, les figures de vol élémentaire Fi peuvent comporter des figures de vol stationnaire pour différents caps, des figures en vol dérapé par exemple.

Le processus de calibration ou d'éducation du système de mesure cinématique selon l'invention, permet une détermination expérimentale des différents coefficients intervenant dans les combinaisons linéaires de restitution de la vitesse de l'hélicoptère par rapport à l'air, selon les directions longitudinale et latérale de celui-ci. Cette identification des coefficients est faite au cours d'un vol spécial dont la durée est d'une vingtaine de minutes environ et comportant les trajectoires ou figures de vol élémentaire Fi précitées. Compte tenu de la facilité de mise en oeuvre du système de mesure cinématique selon l'invention, un processus de calibration pourra bien entendu être conduit lors de la première mise en service de l'hélicoptère considéré, à partir d'un système non dédié, en l'absence de coefficients de combinaison linéaire implantés en mémoire morte 372, ou à partir d'un système pseudo-dédié dans lequel les valeurs des coefficients des combinaisons linéaires précitées correspondent à des valeurs moyennes pour un type d'appareil considéré. En outre, et compte tenu de la facilité de mise en oeuvre du système de mesure cinématique selon l'invention, un nouveau processus de calibration ou d'éducation pourra être avantageusement effectué après chaque démontage du rotor de l'hélicoptère ou d'un moyen de mesure du pas ou de toute pièce mécanique essentielle pour le vol de l'hélicoptère. Ainsi, le système de mesure cinématique objet de l'invention est auto-adaptatif en fonction des variations des paramètres de construction ou de maintenance mécanique de celui-ci. Le processus de calibration ou d'éducation est entièrement automatique ainsi que décrit précédemment, il peut être déclenché par des mots de commande par exemple. Le programme de type menu et les sous-programmes d'acquisition et de test de suffisance de conditionnement en 1004 ainsi que de suffisance du nombre d'équations en 1005, permettent de sélectionner automatiquement les meilleures mesures. Les calculs des paramètres de calibration ou coefficient des combinaisons linéaires de restitution de la vitesse par rapport à l'air peuvent alors être effectués lorsqu'un nombre suffisant de mesure a été sélectionné.

La résolution du système peut ensuite être effectuée, un filtrage du type filtrage récursif ou filtrage de Kalmann pouvant être réalisé, afin d'améliorer la précision des calculs. Bien entendu, le filtrage précité est essentiellement envisagé dans le cas où le nombre d'équations composant le système est largement supérieur au nombre de coefficients à calculer et présente de ce fait une certaine redondance.

Les calculs des composantes de vitesse du vent sur les directions nord et est sont normalement indépendants. Toutefois, l'algorithme prévoit de pouvoir utiliser sur l'axe longitudinal les composantes du vent calculées sur l'axe transversal et vice versa. L'algorithme de calibration est automatique, il sélectionne les meilleures mesures suivant un critère d'acceptation précédemment décrit, qui permet d'améliorer les estimations des coefficients $\alpha$ et $\beta$ par la méthode des moindres carrés à chaque acquisition de valeur des mesures de calibration d'ordre i correspondant à une figure de vol Fi acceptée.

D'autre part, l'algorithme permet également le rejet systématique des mesures provenant d'une phase de vol transitoire, dans laquelle une accélération ou une vitesse angulaire trop importante est présente.

Suite au vol d'essai, les valeurs des coefficients $\alpha$ et $\beta$ des combinaisons linéaires de restitution de la vitesse de l'hélicoptère par rapport à l'air sont implantées en mémoire morte 372. Le système de mesure cinématique objet de l'invention est alors autonome et constitue un système de mesure cinématique dédié. Il permet alors de délivrer à partir des valeurs des paramètres de fonctionnement mécaniques et dynamiques mesurées de l'hélicoptère et des combinaisons linéaires conditionnées, c'est-à-dire dans lesquelles les coefficients ont été déterminés non seulement pour le type d'appareil correspondant mais pour l'appareil lui même, les valeurs de la vitesse longitudinale Vax et Vay de l'hélicoptère par rapport à l'air, notamment pour le domaine des basses vitesses de celui-ci.

Afin d'assurer une mesure de vitesse de l'hélicoptère par rapport à l'air sur toute la plage de vitesses de celui-ci, le système de mesure cinématique objet de l'invention, ainsi que représenté en figure 2, comporte en outre des moyens de mesure anémométriques notés An, haute vitesse, permettant d'établir la valeur de la vitesse longitudinale Vahx de l'hélicoptère en vol par rapport à l'air à haute vitesse. Bien entendu, ces moyens de mesure anémométriques An sont des moyens de type classique et ne seront pas décrits en détail. Ils sont représentés symboliquement sur la figure 2 par un anémomètre schématisé.

Selon une autre caractéristique avantageuse du système de mesure cinématique objet de l'invention, afin d'assurer une transition de la valeur de la vitesse longitudinale Vax, de l'hélicoptère, par rapport à l'air dans tout le domaine de vitesse de l'hélicoptère, les moyens de calcul proprement dits 37 comportent également un programme de pondération des vitesses précitées, dans lequel la vitesse résultante Vrx longitudinale, de l'hélicoptère par rapport à l'air est calculée comme la somme pondérée des composantes longitudinale Vax1 et Vax2 délivrées respectivement par les moyens de calcul à partir des combinaisons linéaires conditionnées précédemment décrites, et par les moyens de mesure anémométriques haute vitesse, respectivement. La vitesse résultante longitudinale de l'hélicoptère par rapport à l'air, après pondération vérifie la relation :

$$Vr\ x = a1\ Va\ x1 + a2\ Va\ x2 \qquad \textcircled{5}$$

Dans la relation 5 précitée, les coefficients de pondération vérifient la relation a1 + a2 = 1. Sur la figure 4c, on a représenté la loi de variation correspondante des coefficients de pondération a1 et a2, en fonction de la valeur de la vitesse de l'hélicoptère par rapport à l'air, pour la plage de vitesses totale considérée. Les calculs de pondération précités peuvent avantageusement être effectués à partir d'un sous-programme permettant, pour la valeur de la vitesse de l'hélicoptère par rapport à l'air estimée, de déterminer la valeur correspondante des coefficients de pondération a1 et a2.

On a ainsi décrit un système autonome de mesure cinématique pour hélicoptère et son utilisation. Le système autonome de mesure cinématique pour hélicoptère objet de l'invention est particulièrement avantageux en raison de la souplesse d'utilisation de celui-ci en fonction des paramètres variables d'aérodynamisme et/ou mécaniques de l'hélicoptère dans la durée de vie de celui-ci. Compte tenu de la haute adaptabilité du système de mesure cinématique objet de l'invention, non seulement au type d'appareil, mais à l'appareil de ce type considéré, celui-ci permet une utilisation de l'hélicoptère équipé du système de mesure cinématique autonome objet de l'invention en toute sécurité et dans des conditions de pilotage optimal quelle que soit la mission confiée à celui-ci. Le système de mesure cinématique selon l'invention peut être utilisé pour la simulation de vol.

## Revendications

1. Système autonome de mesure cinématique pour hélicoptère, l'hélicoptère comportant un rotor de sustentation (Ros), un rotor anticouple (Rac), des premiers moyens de commande du pas cyclique (Pc) et du pas collectif (Pcol) du rotor de sustentation (Ros) et des deuxièmes moyens de commande du pas (Pac) du rotor anticouple, caractérisé en ce que des directions longitudinale x et transversale y étant définies par un repère d'axes x, y, lié au centre de gravité (G) de l'hélicoptère et définissant, l'hélicoptère étant au sol, un plan parallèle à celui-ci, ledit système comporte :

– des moyens (RD) de mesure de la vitesse par rapport au sol de l'hélicoptère, lesdits moyens délivrant en fonctionnement un signal (Vs) de vitesse de l'hélicoptère par rapport au sol,

– des moyens de mesure (3, 31) du pas cyclique longitudinal (Pcx) des pales du rotor de sustentation (Ros) délivrant un signal de mesure du pas cyclique longitudinal (Pcx),

– des moyens de mesure (3, 32) du pas cyclique latéral (Pcy) des pales du rotor de sustentation (Ros) délivrant un signal de mesure du pas cyclique longitudinal (Pcy),

– des moyens de mesure (34) du pas collectif (Pcol) imprimé aux pales du rotor de sustentation (Ros), délivrant un signal de mesure du pas collectif (Pcol),

– des moyens (35) de mesure du pas (Pac) du rotor anticouple (Rac) délivrant un signal de mesure du pas (Pac) du rotor anticouple (Rac),

– des moyens (33) du type accéléromètre délivrant un signal d'accélération de l'hélicoptère, ledit signal d'accélération correspondant à un premier signal ($\gamma$x) représentatif de l'accélération longitudinale et à un deuxième signal ($\gamma$y) représentatif de l'accélération latérale de l'hélicoptère par rapport au sol,

– des moyens de mesure de l'angle de cap ($\theta$) de l'hélicoptère délivrant un signal (Vcap) représentatif de l'angle de cap de l'axe xx de l'hélicoptère par rapport au nord géographique,

– des moyens de calcul auxiliaire, recevant les informations (Vs) de vitesse de l'hélicoptère par rapport au sol (Pcx) (Pcy) et (Pcol) de pas cyclique longitudinal, latéral et collectif du rotor de sustentation (Ros), (Pca) de pas du rotor anticouple, ($\gamma$x) et ($\gamma$y) d'accélération longitudinale et transversale de l'hélicoptère par rapport au sol, et délivrant les informations de vitesse longitudinale (Vax) et latérale (Vay) de l'hélicoptère par rapport à l'air, lesdites vitesses longitudinale (Vax) et latérale (Vay) par rapport à l'air étant calculées à partir d'une fonction biunivoque des valeurs des paramètres mécaniques et dynamiques mesurées de pas cyclique longitudinal (Pcx) de pas cyclique latéral (Pcy), de pas collectif (Pcol) du rotor de sustentation, de pas (Pac) du rotor anticouple (Rac), de l'accélération longitudinale ($\gamma$x) et latérale ($\gamma$y) de l'hélicoptère par rapport au sol.

2. Système selon la revendication 1, caractérisé en ce que dans le domaine des basses vitesses de l'hélicoptère par rapport à l'air, ladite fonction biunivoque à partir de laquelle sont établies les vitesses longitudinale (Vax) et latérale (Vay) de l'hélicoptère par rapport à l'air est une combinaison linéaire desdites informations mesurées.

3. Système de navigation selon la revendication 2, caractérisé en ce que les combinaisons linéaires des informations mesurées établissant la valeur de la vitesse longitudinale (Vax) respectivement latérale (Vay) de l'hélicoptère par rapport à l'air ont même forme et vérifient respectivement les relations :

$$Vax = \alpha1\ Pcx + \alpha2\ Pcy + \alpha3\ \gamma x + \alpha4\ \gamma y + \alpha5\ Pcol + \alpha6\ Pac + \alpha7$$

$$Vay = \beta1\ Pcx + \beta2\ Pcy + \beta3\ \gamma x + \beta4\ \gamma y + \beta5\ Pcol + \beta6\ Pac + \beta7$$

relations dans lesquelles $\alpha1....\alpha7$ et $\beta1....\beta7$ sont des coefficients appartenant à l'ensemble des nombres réels.

4. Système selon l'une des revendications 1 à 3, caractérisé en ce que lesdits moyens de calcul comportent :

– des moyens (36) d'échantillonnage et de numérisation des signaux de mesure du pas cyclique longitudinal (Pcx), du pas cyclique latéral (Pcy), du pas collectif (Pcol) et du pas (Pac) du rotor anticouple,

– des moyens (371) de mémorisation du type mémoire vive destinés à mémoriser la valeur instantanée des valeurs de mesure numérisées,

– des moyens (372) de mémorisation du type mémoire morte comportant, pour un type d'hélicoptère donné une table de valeurs des coefficients $\alpha1,.....\alpha7$ et $\beta1.....\beta7$ permettant d'établir les valeurs des vitesses longitudinale (Vax) et latérale (Vay) en fonction des valeurs mesurées en fonctionnement.

5. Système selon la revendication 4, caractérisé en ce que lesdits moyens de calcul comportent :
– un programme de calcul des valeurs des combinaisons linéaires exprimant la vitesse longitudinale (Vax) et transversale (Vay),
– un programme de calcul de changement d'axe par rotation sensiblement égale à 45°.

6. Système selon l'une des revendications 4 ou 5, caractérisé en ce que lesdits moyens de calcul, recevant en outre l'information d'angle de cap (Vcap), comportent également un programme de type menu, permettant, au moyen d'un dialogue interactif pilote-machine, d'effectuer par une opération de calibration ou éducation du système pour un type d'hélicoptère et un hélicoptère donné une identification des coefficients $\alpha i.....\alpha 7$ et $\beta 1.....\beta 7$, à partir d'un vol d'essai de l'hélicoptère à bord duquel ledit système est embarqué.

7. Système selon la revendication 6, caractérisé en ce que ledit programme menu comporte une série d'incitations invitant le pilote à bord de l'hélicoptère à effectuer au cours du vol d'essai une pluralité de figures de vol élémentaires (Fi), chaque figure de vol élémentaire (Fi) étant définie par une valeur de cap ($\theta i$) et une valeur de vitesse (Vsi) de l'hélicoptère par rapport au sol, les paramètres d'angle de cap et de vitesse (Vsi) étant pour le vol d'essai considérés comme variables indépendantes.

8. Système selon la revendication 7, caractérisé en ce que au cours de chaque figure de vol élémentaire (Fi) constitutive du vol d'essai, ledit programme menu comporte un sous-programme d'acquisition d'une pluralité de paramètres de calibration, lesdits paramètres de calibration consistant en la valeur mesurée, au cours de la figure de vol élémentaire d'ordre i du pas cyclique longitudinal ($pcx_i$) du pas cyclique latéral ($pcy_i$), de l'accélération longitudinale ($\gamma x_i$), de l'accélération latérale ($\gamma y_i$), du pas collectif ($pcol_i$), du pas du rotor anticouple ($pac_i$), du cosinus et du sinus de l'angle de cap $\theta i$ de l'hélicoptère.

9. Système selon l'une des revendications 7 ou 8, caractérisé en ce que au cours desdites figures de vol élémentaire (Fi) constitutives du vol d'essai ledit programme de type menu comporte un sous-programme d'évaluation des paramètres de calibration, pour la figure de vol élémentaire d'ordre i considérée, ledit sous-programme consistant, à partir des valeurs mesurées de la vitesse de l'hélicoptère par rapport au sol vitesse longitudinale (Vsxi) et latérale (Vsyi) à :
– établir (1000) pour les directions longitudinale et transversale de l'hélicoptère, les formes linéaires

$$Vsxi = \alpha 1 \times pcx_i + \alpha 2 \times pcy_i + \alpha 3 \times \gamma x_i + \alpha 4 \times \gamma y_i + \alpha 5 \times pcol_i$$
$$+ \alpha 6 \times pac_i + \alpha 7 + \alpha 8 \times Cos\theta_i + \alpha 9 \times Sin\theta_i \, ,$$

$$Vsyi = \beta 1 \times pcxi + \beta 2 \times pcy_i + \beta 3 \times \gamma x_i + \beta 4 \times \gamma y_i + \beta 5 \times pcol_i$$
$$+ \beta 6 \times pac_i + \beta 7 + \beta 8 \times Cos\theta_i + \beta 9 \times Sin\theta_i .$$

– soumettre (1001, 1002) lesdites formes linéaires à un test de validation des paramètres de calibration de la figure de vol élémentaire (Fi) correspondante,
– incorporer (1003) lesdites formes linéaires dans un système d'équations linéaires représentatives de l'état du système machine après la figure de vol élémentaire (Fi) d'ordre i acceptée,
– soumettre (1004) le système d'équations (S(Vsxi)) ; (S(Vsyi)) à un test de suffisance de conditionnement consistant en une comparaison du nombre de valeurs de variables indépendantes angle de cap ($\theta i$) et de vitesses par rapport au sol (Vsxi, Vsyi),
– soumettre (1005) le système d'équations (S(Vsxi)) ; (S(Vsyi)) à un test de suffisance du nombre d'équations le constituant afin, sur réponse négative, d'inciter le pilote à effectuer une autre figure de vol élémentaire et, sur réponse positive, d'effectuer la résolution (1006) du système d'équations pour déterminer la valeur des coefficients $\alpha 1.....\alpha 7$ et $\beta 1.....\beta 7$, constituant les combinaisons linéaires permettant d'exprimer la vitesse longitudinale (Vax) et latérale (Vay), de l'hélicoptère par rapport à l'air, les coefficients $\alpha 8$, $\alpha 9$ et $\beta 8$, $\beta 9$ correspondant aux composantes estimées nord et est de la vitesse du vent.

10. Système selon la revendication 9, caractérisé en ce que ledit test (1001, 1002) de validation des paramètres de calibration de la figure de vol élémentaire (Fi) correspondante est effectué sur un critère d'état représentatif de la distribution uniforme des angles de cap ($\theta i$) et des valeurs de vitesse par rapport au sol (Vsxi), (Vsyi) sur la plage des vitesses et des angles de cap utilisés pour la définition des figures de vol élémentaires (Fi).

11. Système selon l'une des revendications 7 à 9, caractérisé en ce que les incitations ou directives données au pilote par le programme de type menu sont données sous la forme d'instructions d'angle de cap ($\theta i$)

et de vitesse par rapport au sol (Vsi) pour les différentes figures de vol élémentaires (Fi) successives.

12. Système selon la revendication 11, caractérisé en ce que les instructions de vitesse par rapport au sol sont données au pilote sous forme de valeurs de composantes de vitesse longitudinale (Vsxi) et latérale (Vsyi) par rapport au sol, les figures de vol élémentaire comportant une pluralité de vols dérapés.

13. Système selon l'une des revendications 9 à 12, caractérisé en ce que, suite au vol d'essai, les valeurs des coefficients α1.....α7 et β1.....β7 des combinaisons linéaires sont implantées en mémoire morte, ledit système étant alors autonome et constituant un système dédié et délivrant, à partir des valeurs de paramètre de fonctionnement mécanique et dynamiques mesurés de l'hélicoptère et des combinaisons linéaires conditionnées, les valeurs de la vitesse longitudinale (Vax) et latérale (Vay) de l'hélicoptère par rapport à l'air.

14. Système selon l'une des revendications 1 à 3, caractérisé en ce qu'il comporte en outre des moyens de mesure anémométrique (An) haute vitesse permettant d'établir la valeur de la vitesse longitudinale (Vahx) de l'hélicoptère par rapport à l'air à haute vitesse.

15. Système selon l'une des revendications 1 à 3 et 14, caractérisé en ce que, afin d'assurer une transition de la valeur de la vitesse longitudinale (Vax) par rapport à l'air dans tout le domaine de vitesse de l'hélicoptère, lesdits moyens de calcul comportent un programme de pondération desdites vitesses dans lequel la vitesse résultante (Vrx) longitudinale est calculée comme la somme pondérée des composantes longitudinales (Vax1), (Vax2) délivrées respectivement par les moyens de calcul à partir des combinaisons linéaires conditionnées et par les moyens de mesure anémométrique haute vitesse respectivement

$$Vrx = a1 \ Vax1 + a2 \ Vax2 \ avec \ a1 + a2 = 1.$$

16. Système selon l'une des revendications précédentes, caractérisé en ce que l'angle de cap (θ) de l'hélicoptère est mesuré au moyen d'un compas magnétique.

17. Utilisation d'un système de mesure cinématique autonome pour hélicoptère dédié selon l'une des revendications 1 à 5, au cours d'un vol d'essai comportant une pluralité de figures de vol (Fi) définies par l'angle de cap (θi) et la vitesse (Vsi) de l'hélicoptère par rapport au sol afin de déterminer les coefficients (α, β) des combinaisons linéaires de restitution de la vitesse de l'hélicoptère par rapport à l'air (Vax, Vay) et constituer un système de mesure cinématique dédié à un type et à un hélicoptère de ce type.

18. Utilisation d'un système de mesure cinématique autonome pour hélicoptère dédié selon l'une des revendications 6 à 16 pour le pilotage d'un hélicoptère.

## Ansprüche

1. Autonomes kinematisches Meßsystem für Hubschrauber, wobei der Hubschrauber enthält : einen Auftriebsrotor (Ros), einen Heckrotor (Rac), eine erste Steuereinrichtung der zyklischen Steigung (Pc) und der Gesamtsteigung (Pcol) des Auftriebsrotors (Ros) und eine zweite Steuereinrichtung der Steigung (Pac) des Heckrotors, **dadurch gekennzeichnet**, daß Längs- und Querrichtungen x und y durch ein Achsenbezugssystem x, y, die mit dem Schwerpunkt (G) des Hubschraubers verbunden ist, definiert sind, und während der Hubschrauber auf dem Boden steht, eine Ebene parallel zu diesem definiert, wobei das System aufweist :
– eine Einrichtung (RD) zur Messung der Geschwindigkeit des Hubschraubers bezüglich der Erdoberfläche, wobei die Einrichtung während des Betriebes ein Signal (Vs) der Hubschraubergeschwindigkeit bezüglich der Erdoberfläche abgibt,
– eine Einrichtung (3, 31) zur Messung der zyklischen longitudinale Steigung (Pcx) der Blätter des Auftriebsrotors (Ros), die ein Messignal der zyklischen longitudinalen Steigung (Pcx) abgibt,
– eine Einrichtung (3, 32) zur Messung der zyklischen seitlichen Steigung (Pcy) der Blätter des Auftriebsrotors (Ros), die ein Messignal der zyklischen seitlichen Steigung (Pcy) abgibt,
– eine Einrichtung (34) zur Messung der Gesamtsteigung (Pcol), die den Blättern des Auftriebsrotors (Ros) aufgeprägt ist, wobei die Einrichtung ein Messignal der Gesamtsteigung (Pcol) abgibt,
– eine Einrichtung (35) zur Messung der Steigung (Pac) des Heckrotors (Rac), die ein Messignal der Steigung (Pac) des Heckrotors (Rac) abgibt,
– eine Beschleunigungsmeßeinrichtung (33), die ein Beschleunigungssignal des Hubschsaubers abgibt, wobei das Beschleunigungssignal einem ersten Signal (γx), das die longitudinale Beschleunigung darstellt, und einem zweiten Signal (γy) entspricht, das die seitliche Beschleunigung des Hubschraubers bezüglich der Erdoberfläche darstellt,
– eine Einrichtung zur Messung des Kurswinkels (θ) des Hubschraubers, die ein Signal (Vcap) abgibt, das den Kurswinkel der Achse xx des Hubschraubers bezüglich der geographischen Nordrichtung darstellt,
– eine zusätzliche Recheneinrichtung, die Informationen (Vs) der Geschwindigkeit des Hubschraubers bezüglich der Erdoberfläche empfängt Informationen (Pcx), (Pcy) und (Pcol) jeweils der zyklischen Längs-, seitlichen und Gesamtsteigung des Auftriebsrotors (Ros), Informationen (Pca) der Steigung des Heckrotors, Informationen ($\gamma$x) und ($\gamma$y) jeweils der longitudinalen und Querbeschleunigung des Hubschraubers bezüglich der Erdoberfläche, und die Informationen der longitudinalen Geschwindigkeit (Vax) und der seitlichen Geschwindigkeit (Vay) des Hubschsaubers bezüglich der Luft abgibt, wobei die longitudinale Geschwindigkeit (Vax) und die seitliche Geschwindigkeit (Vay) bezüglich der Luft auf der Basis einer eineindeutigen Funktion der Werte der gemessenen mechanischen und dynamischen Parameter der zyklischen longitudinalen Steigung (Pcx), der zyklischen seitlichen Steigung (Pcy) und der Gesamtsteigung (Pcol) des Auftriebsrotors, der Steigung (Pac) des Heckrotors (Rac), und der longitudinalen Beschleunigung ($\gamma$x) und der seitlichen Beschleunigung ($\gamma$y) des Hubschraubers bezüglich der Erdoberfläche berechnet werden.

2. System nach Anspruch 1, dadurch gekennzeichnet, daß im Bereich der niedrigen Geschwindigkeiten des Hubschraubers bezüglich der Luft, die eineindeutige Funktion, auf deren Basis die longitudinale Geschwindigkeit (Vax) und die seitliche Geschwindigkeit (Vay) des Hubschsaubers bezüglich der Luft bestimmt werden, eine lineare Kombination der gemessenen Informationen ist.

3. Navigationssystem nach Anspruch 2, dadurch gekennzeichnet, daß die linearen Kombinationen der gemessenen Informationen, die jeweils den Wert der longitudinalen Geschwindigkeit (Vax) und der seitlichen Geschwindigkeit (Vay) des Hubschraubers bezüglich der Luft bestimmen, die gleiche Form und jeweils die folgenden Beziehungen verwirklichen :

$$Vax = \alpha_1 \, Pcx + \alpha_2 \, Pcy + \alpha_3 \, \gamma x + \alpha_4 \, \gamma y + \alpha_5 \, Pcol + \alpha_6 \, Pac + \alpha_7$$

$$Vay = \beta_1 \, Pcx + \beta_2 \, Pcy + \beta_3 \, \gamma x + \beta_4 \, \gamma y + \beta_5 \, Pcol + \beta_6 \, Pac + \beta_7$$

wobei $\alpha_1...\alpha_7$ und $\beta_1...\beta_7$ Koeffizienten sind, die reelle Zahlen darstellen.

4. System nach einem der Ansprüche 1 bis 3, dadurch gekennzeichnet, daß die Recheneinrichtung aufweist :

– eine Einrichtung (36) zur Abtastung und Digitalisierung der Meßsignale der zyklischen longitudinalen Steigung (Pcx), der zyklischen seitlichen Steigung (Pcy), der Gesamtsteigung (Pcol) und der Steigung (Pac) des Heckrotors,

– eine flüchtige Speichereinrichtung (371) zur Speicherung des augenblicklichen Wertes der digitalisierten Meßwerte,

– eine nicht-flüchtige Speichereinrichtung (372), die für einen gegebenen Hubschrauber eine Tafel von Werten der Koeffizienten $\alpha_1...\alpha_7$ und $\beta_1...\beta_7$ enthält, die erlaubt, die Werte der longitudinalen Geschwindigkeit (Vax) und der Quergeschwindigkeit (Vay) in Abhängigkeit der Werte, die während des Betriebs gemessen werden, zu bestimmen.

5. System nach Anspruch 4, dadurch gekennzeichnet, daß die Recheneinrichtung aufweist :

– ein Rechenprogramm für die Werte der linearen Kombinationen, die die longitudinale Geschwindigkeit (Vax) und die Quergeschwindigkeit (Vay) ausdrücken,

– ein Rechenprogramm für die Änderung der Achse durch eine Rotation um im wesentlichen gleich 45°.

6. System nach Anspruch 4 oder 5, dadurch gekennzeichnet, daß die Recheneinrichtung, die außerdem die Information des Kurswinkels (Vcap) empfängt, auch ein Menü-Programm enthält, das mittels eines Dialogs zwischen Pilot und Maschine erlaubt, durch ein Kalibrieren oder Trainieren des Systems für eine Art von Hubschrauber und einen gegebenen Hubschrauber eine Identification der Koeffizienten $\alpha_1...\alpha_7$ und $\beta_1...\beta_7$, auf der Basis eines Probefluges des Hubschraubers, in dem das System geladen ist, durchzuführen.

7. System nach Anspruch 6, dadurch gekennzeichnet, daß das Menü-Programm eine Reihe Anregungen aufweist, die den Piloten im Hubschrauber dazu bringen während des Probeflugs eine Vielzahl von elementaren Flugfiguren (Fi) auszuführen wobei jede elementare Flugfigur (Fi) durch einen Kurswert ($\theta$i) und einen Geschwindigkeitswert (Vsi) des Hubschraubers bezüglich der Erdoberfläche definiert ist, wobei die Parameter des Kurswinkels und der Geschwindigkeit (Vsi) für den Probeflug als unabhängige Variable betrachtet werden.

8. System nach Anspruch 7, dadurch gekennzeichnet, daß während jeder elementaren den Probeflug darstellenden Flugfigur (Fi) das Menü-Programm ein Unterprogramm für die Akquisition einer Vielzahl von Kalibrierungsparametem aufweist, wobei die Kalibrierungsparameter während der elementaren Flugfigur des Ranges i aus den gemessenen Wert der zyklischen longitudinalen Steigung ($pcx_i$) besteht, der zyklischen seitlichen Steigung ($pcy_i$) der longitudinalen Beschleunigung ($\gamma x_i$), der seitlichen Beschleunigung ($\gamma y_i$), der Gesamtsteigung ($pcol_i$), der Steigung ($pac_i$) des Heckrotors, des Kosinus und des Sinus des Kurswinkels $\theta$i des Hubschraubers.

9. System nach einem der Ansprüche 7 oder 8, dadurch gekennzeichnet, daß während der elementaren Flugfiguren (Fi), die den Probeflug darstellen das Menü-Programm ein Unterprogramm für die betrachtete, elementare Flugfigur des Ranges i für die Bewertung der Kalibrierungsparameter aufweist, wobei das Unterprogramm auf der Basis der gemessenen Werte der longitudinalen Geschwindigkeit (Vsxi) und seitlichen Geschwindigkeit (Vsyi) des Hubschraubers bezüglich der Erdoberfläche besteht aus :

– Festsetzen (1000) der linearen Formeln

$$Vsxi = \alpha_1 \times pcx_i + \alpha_2 \times pcy_i + \alpha_3 \times \gamma x_i + \alpha_4 \times \gamma y_i + \alpha_5 \times pcol_i +$$
$$\alpha_6 \times pac_i + \alpha_7 + \alpha_8 \times Cos\theta_i + \alpha_9 \times Sin\theta_i,$$
$$Vsyi = \beta_1 \times pcx_i + \beta_2 \times pcy_i + \beta_3 \times \gamma x_i + \beta_4 \times \gamma y_i + \beta_5 \times pcol_i +$$
$$\beta_6 \times pac_i + \beta_7 + \beta_8 \times Cos\theta_i + \beta_9 \times Sin\theta_i,$$

für die longitudinale Richtung und die Querrichtung des Hubschraubers,

– Unterziehen (1001, 1002) der linearen Formeln an einem Gültigkeitstest der Kalibrierung der entsprechenden elementaren Flugfigur (Fi),

– Inkorporieren (1003) der linearen Formeln in ein System von linearen Gleichungen, die den Zustand des Maschinensystems nach der angenommenen elementaren Flugfigur (Fi) des Ranges i darstellen,

– Unterwerfen (1005) des Gleichungssystems (S(Vsxi)) ; (S(Vsyi)) einem Test ausreichender Aufbereitung unterwerfen, der aus einem Vergleich der Zahl der Werte der unabhängigen variablen Kurswinkel ($\theta$i) und Geschwindigkeiten (Vsxi, Vsyi) bezüglich der Erdoberfläche steht,

– das Gleichungssystem (S(Vsxi)) ; (S(Vsyi)) einem Test (1005) der ausreichenden Zahl von Gleichungen, die es darstellen, um im Falle einer negativen Antwort den Piloten dazu anzuregen, eine andere elementare Flugfigur auszuführen, und im Falle einer positiven Antwort die Auflösung (1006) des Gleichungssystems aufzuführen, um den Wert der Koeffizienten $\alpha_1...\alpha_7$ und $\beta_1...\beta_7$ zu bestimmen, die die linearen Kombinationen ausmachen, die erlauben, die longitudinale Geschwindigkeit (Vax) und die seitliche Geschwindigkeit (Vay) des Hubschraubers bezüglich der Luft auszudrücken, wobei die Koeffizienten $\alpha_8$, $\alpha_9$ und $\beta_8$, $\beta_9$ den geschätzten Komponenten Nord und Ost der Windgeschwindigkeit entsprechen.

10. System nach Anspruch 9, dadurch gekennzeichnet, daß der Gültigkeitstest (1001, 1002) der Parameter der Kalibrierung der entsprechenden elementaren Flugfigur (Fi) gemäß einem Zustandskriterium das die uniforme Verteilung der Kurswinkel ($\theta$i) und der Geschwindigkeitswerte (Vsxi), (Vsyi) bezüglich der Erdoberfläche im Bereich der Geschwindigkeiten und der Kurswinkel darstellt, die für die Definition der elementaren Flugfiguren (Fi) benutzt werden.

11. System nach einem der Ansprüche 7 bis 9, dadurch gekennzeichnet, daß dem Piloten gegebenen Anregungen oder Richtlinien durch das Menü-Programm in der Form von Befehlen bezüglich des Kurswinkel ($\theta$i) und der Geschwindigkeit (Vsi) bezüglich der Erdoberfläche für die unterschiedlichen, sukzessiven elementaren Flugfiguren (Fi) gegeben werden.

12. System nach Anspruch 11, dadurch gekennzeichnet daß die Befehle der Geschwindigkeit bezüglich der Erdoberfläche dem Piloten in der Form von Werten von Komponenten der longitudinalen Geschwindigkeit (Vsxi) und der seitlichen Geschwindigkeit (Vsyi) bezüglich der Erdoberfläche gegeben werden, wobei die elementaren Flugfiguren eine Vielzahl von mißlungenen Flügen aufweisen.

13. System nach einem der Ansprüche 9 bis 12, dadurch gekennzeichnet, daß in Folge des Probeflugs die Werte der Koeffizienten $\alpha_1...\alpha_7$ und $\beta_1...\beta_7$ der linearen Kombinationen in einen nicht-flüchtigen Speicher gespeichert werden, wobei das System dann autonom ist und ein zugeschnittenes System bildet, das auf der Basis der Parameterwerte des mechanischen und dynamischen Funktionierens, die aus dem Hubschrauber gemessen sind, und der bedingten linearen Kombinationen die Werte der longitudinalen Geschwindigkeit (Vax) und seitlichen Geschwindigkeit (Vay) des Hubschraubers bezüglich der Luft abgibt.

14. System nach einem der Ansprüche 1 bis 3, dadurch gekennzeichnet, daß es außerdem eine anemometrische Meßeinrichtung (An) hoher Geschwindigkeit aufweist, die erlaubt, den Wert der longitudinalen Geschwindigkeit (Vahx) des Hubschraubers bezüglich der Luft mit hoher Geschwindigkeit festzustellen.

15. System nach einem der Ansprüche 1 bis 3 und 14, dadurch gekennzeichnet, daß um einen Übergang des Wertes der longitudinalen Geschwindigkeit (Vax) bezüglich der Luft im gesamten Geschwindigkeitsbereich der Hubschraubergeschwindigkeiten zu gewährleisten, die Recheneinrichtung ein Programm für die Gewichtung der Geschwindigkeiten aufweist, in dem die resultierende longitudinale Geschwindigkeit (Vrx) als abgewichtete Summe der longitudinalen Komponenten (Vax1), (Vax2) berechnet wird, die jeweils durch die Recheneinrichtung auf der Basis der bedingten linearen Kombinationen und die anemometrische Meßeinrichtung hoher Geschwindigkeit abgegeben werden,

14

$$Vrx = \alpha_1 \, Vax_1 + \alpha_2 \, Vax_2 \text{ mit } \alpha_1 + \alpha_2 = 1.$$

16. System nach einem der vorhergehenden Ansprüche, dadurch gekennzeichnet, daß der Kurswinkel ($\theta$) des Hubschraubers mittels eines magnetischen Kompaß gemessen wird.

17. Verwendung eines autonomen kinematischen Meßsystems für Hubschrauber, das in einem der Ansprüche 1 bis 5 definiert ist, während eines Probeflugs, der eine Vielzahl von Flugfiguren (Fi) enthält, die durch den Kurswinkel ($\theta$i) und die Geschwindigkeit (Vsi) des Hubschraubers bezüglich der Erdoberfläche definiert sind, um die Koeffizienten ($\alpha$, $\beta$) der linearen Kombinationen der Auswertung der Hubschraubergeschwindigkeit (Vax, Vay) bezüglich der Luft zu bestimmen und ein kinematisches Meßsystem für eine Art und einen Hubschrauber dieser Art zu bilden.

18. Verwendung eines autonomen kinematischen Meßsystems für Hubschrauber, das in einem der Ansprüche 6 bis 16 definiert ist, für die Steuerung eines Hubschraubers.

## Claims

1. An autonomous kinematic measurement system for helicopters, said helicopter comprising a lifting rotor (Ros), an anti-torque rotor (Rac), first means to control the cyclic pitch (Pc) and the collective pitch (Pcol) of the lifting rotor (Ros) and second means to control the anti-torque rotor pitch (Pac) wherein, longitudinal x and transversal y directions being defined by a reference of axes x, y, related to the helicopter's center of gravity and defining, with the helicopter on the ground, a plane parallel to said helicopter, said system comprises means (RD) to measure the helicopter's ground speed, said means giving, during operation, a signal (Vs) of the helicopter's ground speed,
   – means (3, 31) to measure the longitudinal cyclic pitch (Pcx) of the lifting rotor (Ros) blades, said means giving a longitudinal cyclic pitch measurement signal,
   – means (3, 32) to measure the lateral cyclic pitch (Pcy) of the lifting rotor (Ros) blades, said means giving a lateral cyclic pitch measurement signal (Pcy),
   – means (34) to measure the collective pitch applied to the lifting rotor (Ros) blades, said means delivering a collective pitch measurement signal,
   – means (35) to measure the pitch (Pac) of the anti-torque rotor (Rac), said means delivering a measurement signal of the pitch (Pac) of the anti-torque rotor (Rac),
   – accelerometer type means (33) delivering a helicopter acceleration signal, the said acceleration signal corresponding to a first signal ($\gamma$x) that represents the helicopter's longitudinal acceleration and a second signal ($\gamma$y) that represents the helicopter's lateral acceleration relative to the ground,
   – means to measure the helicopter's direction angle ($\theta$), delivering a signal (Vac) representing the direction angle of the helicopter's axis xx with respect to the geographic north,
   – ancillary computing means receiving data (Vs) on the helicopter's ground speed, data (Pcx) (Pcy) and (Pcol) on the longitudinal, lateral and collective cyclic pitch of the lifting rotor (Ros), data (Pac) on the anti-torque rotor pitch, data (vx) and (vy) on the helicopter's longitudinal and transversal acceleration with respect to the ground, and delivering data on the helicopter's longitudinal (Vax) and lateral (Vay) airspeeds, the said longtudinal (Vax) and lateral (Vay) airspeeds being computed from a one-to-one function of the values of the measured mechanical and dynamic parameters of the lifting rotor's longitudinal cyclic pitch (Pcx), lateral cyclic pitch (Pcy) and collective pitch (Pcol), the pitch (Pac) of anti-torque rotor (Rac), and the helicopter's longitudinal ($\gamma$x) and lateral ($\gamma$y) acceleration with respect to the ground.

2. A system according to claim 1 wherein, in the helicopter's low airspeed range, the said one-to-one function from which the helicopter's longitudinal airspeed speed (Vax) and lateral airspeed (Vay) are established, is a linear combination of the said measured data.

3. A system according to claim 2 wherein the linear combinations of the measured data establishing the value of the helicopter's longitudinal airspeed (Vax) and lateral airspeed (Vay) respectively have the same form and respectively verify the following relationships :

$$Vax = \alpha 1 \, Pcx + \alpha 2 \, Pcy + \alpha 3 \gamma x + \alpha 4 \gamma y + \alpha 5 \gamma Pcol + \alpha 6 \, Pac + \alpha 7 \quad (1)$$

$$Vay = \beta 1 \, Pcx + \beta 2 \, Pcy + \beta 3 \gamma x + \beta 4 \gamma y + \beta 5 \gamma Pcol + \beta 6 \, Pac + \beta 7 \quad (2)$$

relationships in which $\alpha 1 \ldots \alpha 7$ and $\beta 1 \ldots \beta 7$ are coefficients belonging to the set of real numbers.

4. A system according to claim 1 wherein said computing means comprise :
   – means (36) for sampling and digitizing the measurement signals of the longitudinal cyclical pitch (Pcx), the lateral cyclical pitch (Pcy), the collective pitch (Pcol) and the pitch (Pac) of the anti-torque rotor.

– memorizing means (371) of the random-access memory type, designed to memorize the instantaneous value of the digitized measurement values,

– memorizing means (372) of the read-only memory type comprising, for a given type of helicopter, a table of values of the coefficients $\alpha 1,....\alpha 7$ and $\beta 1...\beta 7$ used to establish the longitudinal speed (Vax) and lateral speed (Vay) values according to the values measured during operation.

5. A system according to claim 4 wherein the said computing means comprise :

– a programme to compute the values of the linear combinations expressing the longitudinal speed (Vax) and transversal speed (Vay),

– a programme to compute change of axis by rotation substantially equal to 45°.

6. A system according to claim 4 wherein the said computing means, further receiving direction angle data (Vcap), also comprise a menu type of programme which can be used, by means of an interactive pilot/machine dialogue, to perform, through an operation to calibrate or educate the system for a type of helicopter and for a given helicopter, an identification of the coefficients $\alpha i...\alpha 7$ and $\beta 1...\beta 7$ from a test flight of the helicopter having the said system on board.

7. A system according to claim 6 wherein the said menu programme has a series of requests to the pilot in the helicopter, asking him to perform several elementary flight patterns (Fi) during the test flight, each elementary flight pattern (Fi) being defined by a direction value ($\theta i$) and a value of the helicopter's ground speed (Vsi), the direction angle and speed (Vsi) parameters being considered as being independent variables for the test flight considered.

8. A system according to claim 7 wherein, during each elementary test pattern (Fi) forming part of the test flight, the said menu programme has a sub-programme for the acquisition of several calibration parameters, the said calibration parameters consisting of the measured value, during the order i elementary test pattern, of the longitudinal cyclical pitch (Pcx$_i$), the lateral cyclical pitch (pcy$_i$), the longitudinal acceleration ($\gamma x_i$), the lateral acceleration ($\gamma y_i$), the collective pitch (pcol$_i$), the anti-torque rotor pitch (pac$_i$), the cosine and sine of the direction angle $\theta i$ of the helicopter.

9. A system according to claim 7 wherein, during the said elementary flight patterns (Fi) constituting the test flight, the said menu type programme comprises a sub-programme for the evaluation of the calibration parameters for the order i elementary flight pattern considered, the said sub-programme consisting in the use of the measured values of the helicopter's ground speed, namely longitudinal speed (Vsxi) and lateral speed (Vsyi) to :

– etablisch (1000) for the longitudinal and transversal directions of the helicopter, the linear forms

$$Vsxi = \alpha 1 \times pcx_i + \alpha 2 \times pcy_i + \alpha 3 \times \gamma x_i + \alpha 4 \times \gamma yi + \alpha 5 \times pcol_i + \alpha 6 \times pac_i + \alpha 7 + \alpha 8 \times Cos^\theta{}_i + \alpha 9 \times Sin^\theta{}_i \qquad (3)$$

$$Vsyi = \beta 1 \times pcxi + \beta 2 \times pcy_i + \beta 3 \times \gamma x_i + \beta 4 \times \gamma yi + \beta 5 \times pcol_i + \beta 6 \times pac_i + \beta 7 + \beta 8 \times Cos^\theta{}_i + \beta 9 \times Sin^\theta{}_i \qquad (4)$$

– subject (1001, 1002) the said linear forms to a test for the validation of the calibration parameters of the corresponding elementary flight pattern (Fi),

– incorporate (1003) the said linear forms in a system of linear equations representing the state of the machine system after the order i elementary flight pattern (Fi) is accepted,

– subject (1004) the system of equations (S(Vsxi)) ; (S(Vsyi)) to a test on conditioning adequacy consisting in a comparison of the number of independent variable values for direction angle ($\theta i$) and ground speeds (Vsxi, Vsyi),

– subject (1005) the system of equations (S(Vsxi)) ; (S(Vsyi)) to a test on the sufficiency of the number of equations constituting it so as to request the pilot, upon a negative response, to perform another elementary flight pattern, and, upon a positive response, to solve the system of equations to determine the value of the coefficients $\alpha 1,...\alpha 7$ and $\beta 1,...\beta 7$ constituting the linear combinations used to express the helicopter's longitudinal airspeed (Vax) and lateral airspeed (Vay), the coefficients $\alpha 8$, $\alpha 9$ and $\beta 8$, $\beta 9$, corresponding to the estimated north and south components of the wind speed.

10. A system according to claim 9 wherein the said test (1001, 1002) for validating the calibration parameters of the corresponding elementary flight pattern (Fi) is done by a status criterion representing the uniform distribution of direction angles ($\theta i$) and ground speed values (Vsxi), (Vsyi) in the range of speeds and the direction angles used to define the elementary flight patterns (Fi).

11. A system according to claim 7 wherein the requests or directives, given to the pilot by the menu type programme, are given in the form of direction angle (θi) and ground speed (Vsi) instructions for the various successive elementary flight patterns (Fi).

12. A system according to claim 11 wherein the ground speed instructions are given to the pilot in the form of values of longitudinal ground speed (Vsxi) and lateral ground speed (Vsyi) components, the elementary flight patterns comprising several sideslipping flights.

13. A system according to claim 9 wherein, following the test flight, the values of the coefficients α1...β7 and β1...β7 of the linear combinations are implanted in a read-only memory, the said system being then autonomous and constituting a dedicated system giving, from the measured values of the helicopter's mechanical and dynamic operation parameters and the conditioned linear combinations, the values of the helicopter's longitudinal airspeed (Vax) and lateral airspeed (Vay).

14. A system according to claim 1 further comprising high airspeed measuring means (An) which can be used to establish the value of the helicopter's longitudinal airspeed (Vahx) at high speed.

15. A system according to claim 1 wherein, in order to provide for a transition of the longitudinal airspeed (Vax) value throughout the speed range of the helicopter, the said computing means comprise a programme for weighting the said speeds, in which the resultant longitudinal speed (Vrx) is computed as the weighted sum of the longitudinal components, (Vax 1) and (Vax 2), respectively given by the computing means from the conditioned linear combinations and the high-speed airspeed measuring means respectively

$$Vrx = a1 \ Vax1 + a2 \ Vax2 \text{ with } a1 + a2 = 1 \quad (5)$$

16. A system according to claim 1 wherein the direction angle (0) of the helicopter is measured by means of a magnetic compass.

17. A use of a non-dedicated autonomous kinematic measurement system for helicopters, according to claims 1, in a test flight comprising several flight patterns (Fi) defined by the helicopter's direction angle (θi) and ground speed (Vsi) in order to determine the coefficients (α, β) of the linear combinations restituting the helicopter's airspeed (Vax, Vay) and in order to constitute a kinematic measurement system dedicated to a type of helicopter and to a helicopter of this type.

18. A use of a dedicated autonomous kinematic measurement system for helicopters, according to claim 6 for the piloting of a helicopter.

_FIG-1a_

_FIG-3_

FIG_1b

FIG_1c

FIG-2

EP 0 282 372 B1

$$FIG-4a$$

$$FIG-4b$$

$$FIG-4c$$